# EUROPEAN PATENT APPLICATION

(11) **EP 0 874 448 A1**
(43) Date of publication of application: **28.10.1998**
(21) Application number: 96900425.8
(22) Date of filing: 10.01.1996
(51) Int. Cl.: H02M 7/48

(54) **MULTILEVEL POWER CONVERTING APPARATUS**

(71) Applicant: Hitachi, Ltd., Chiyoda-ku, Tokyo 101-0062 (JP)
(72) Inventor: ITO, Satoru, Ibaraki 319-12 (JP); NAKATA, Kiyoshi 626-4, Kuwada, Ibaraki 309-12 (JP); SUZUKI, Masato, Ibaraki 319-21 (JP); NAKAMURA, Kiyoshi, Ibaraki 312 (JP)
(74) Representative: Strehl Schübel-Hopf & Partner
(86) International application number: JP9600022
(87) International publication number: WO9725766

(57) **Abstract**

A multilevel power converting apparatus comprising two sets of multilevel PWM controlled power supply converters for converting a DC voltage into multilevel AC voltage pulses by means of PWM control, positive DC sides and negative DC sides thereof being connected with each other, the first of the power supply converters having its AC side connected with an AC power source of a fixed frequency, the second of the power supply converters having its AC side outputting variable voltages of variable frequencies and its output terminal being connected with a load, and the first and second power supply converters having their DC sides respectively connected with a first and a second DC stage circuit each thereof being formed of a plurality of serially connected filter capacitors, wherein the center voltage points of the first DC stage circuit and the second DC stage circuit are connected with each other and voltage controlling of the center voltage point is carried out on the side of the first power supply converter.

## Description

### TECHNICAL FIELD

The present invention relates to a multilevel power converting apparatus comprising at least two sets of power supply supply converters for converting a DC voltage into multilevel AC voltage pulses by PWM control, in which the power supply supply converters have their DC sides connected with each other.

### BACKGROUND ART

In recent years, multilevel PWM controlled power supply supply converters having serially connected switching elements and capable of reducing higher harmonics, while increasing the number of levels of the AC output voltage, have come to be widely used. In the multilevel PWM controlled power supply supply converter, it is important to control the center voltage of the series capacitors in the DC stage constant in order to output the voltage according to a command.

For example, there is disclosed in the gazette of Japanese Patent Laid-open No. Hei 5-217185 a method of controlling the neutral point voltage of a three-level inverter.

Further, there is disclosed in the gazette of Japanese Patent Laid-open No. Hei 6-233537 a method of controlling the neutral point voltage of a three-level supply supply converter.

However, there is no disclosure concerning a method of controlling the neutral point voltage in a supply supply converter-inverter system and a main circuit configuration related thereto.

If the above mentioned two methods are used as they are and the neutral point voltage control is carried out separately for the supply supply converter and the inverter, it means that the control circuit, for example the microcomputer, is overburdened accordingly and produces problems of increase in operating time and increase in the number of steps of the software.

Also, there is a problem, in the neutral point voltage control of the inverter, that the effect of the neutral point voltage control is decreased because the number of pulses in one cycle is decreased in the range of higher output frequency.

An object of the present invention is to effectively realize the neutral point voltage control in the supply supply converter-inverter system with a relatively simple system configuration.

### DISCLOSURE OF INVENTION

The above object can be attained, in a multilevel power converting apparatus comprising at least two sets of multilevel PWM controlled power supply supply converters for converting a DC voltage into multilevel AC voltage pulses by means of PWM control, positive DC sides and negative DC sides thereof being connected with each other, the first of the power supply supply converters having its AC side connected with an AC power source of a fixed frequency, the second of the power supply supply converters having its AC side outputting variable voltages of variable frequencies and its output terminal being connected with a load, and the first and second power supply supply converters having their DC sides respectively connected with a first and a second DC stage circuit each thereof being formed of a plurality of serially connected filter capacitors, by having the center voltage points of the first DC stage circuit and the second DC stage circuit connected with each other and voltage controlling of the center voltage point carried out on the side of the first power supply supply converter.

According to the invention, by having the voltage control of the center voltage point carried out on the side of the first power supply converter whose AC side is kept at a fixed frequency, the control can be carried out simply and, further, the center voltage point of the second DC stage circuit can be controlled at the same time. Accordingly, simplification of the controlling system configuration for the center point voltage control of multilevel power converting apparatus can be attained.

### BRIEF DESCRIPTION OF DRAWINGS

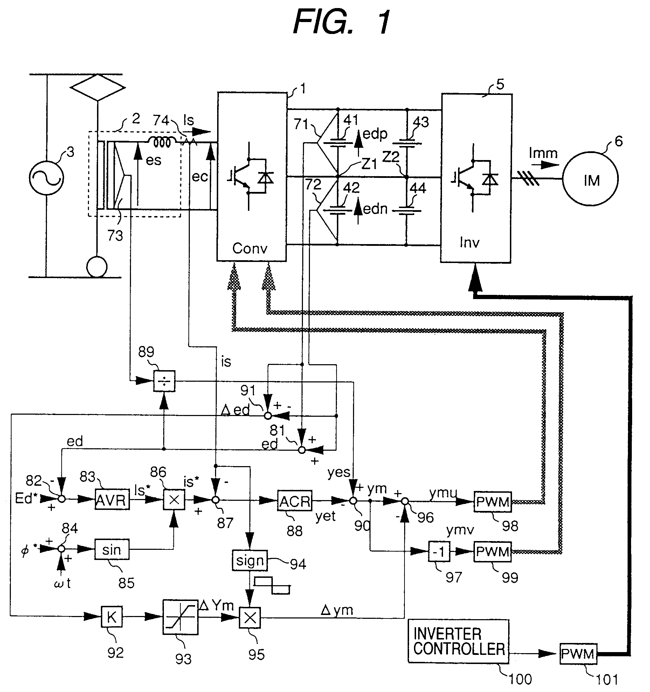

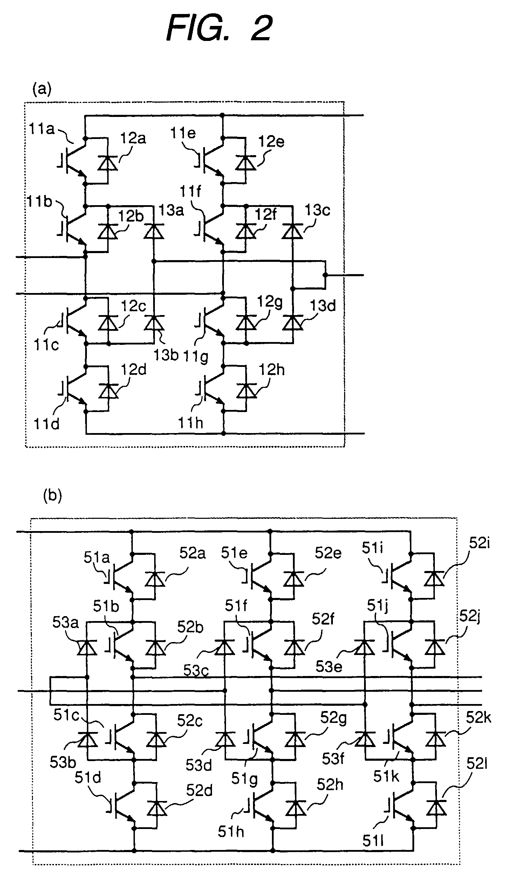

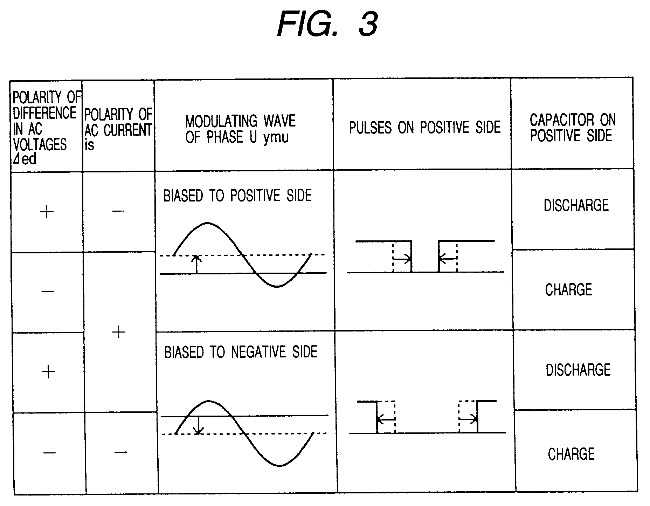

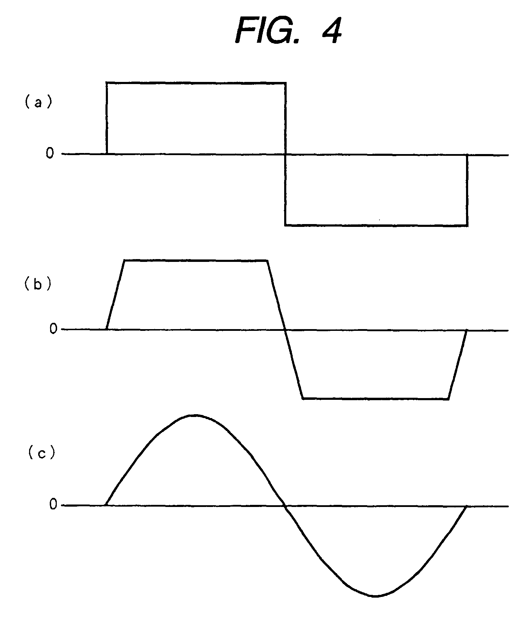

FIG. 1 is a structural drawing of a power converting apparatus showing an embodiment of the invention, FIG. 2 is a drawing showing the main circuit configuration of the power supply converter of the embodiment of FIG. 1, FIG. 3 is a drawing showing the principle of the neutral point voltage control according to the embodiment of FIG. 1, and FIG. 4 is a drawing showing waveforms to be used in replacement of the polarity signal waveform of the embodiment of FIG. 1 for decreasing higher harmonics.

### BEST MODE FOR CARRYING OUT THE INVENTION

An embodiment of the invention will be described with reference to FIG. 1 which shows an application of the same to an electric vehicle.

A multilevel power supply converter 1 (hereinafter referred to as "supply converter") for converting single-phase AC power to DC power indicates a three-level supply converter comprising switching elements 11a to 11h and rectifying elements 12a to 12h as shown in FIG. 2(a). On the other hand, a multilevel power supply converter 5 (hereinafter referred to as "inverter") for converting DC power received from the supply converter into AC power indicates a three-level inverter comprising switching elements 51a to 51l and rectifying elements 52a to 52l and 53a to 53f as shown in FIG. 2(b) . Incidentally, detailed description of the main circuit configuration of the supply converter-inverter shown in FIG. 2 will be omitted here because it is disclosed in the above mentioned laid-open patent publications.

Referring to FIG. 1, the AC side of the supply converter 1 is connected with a single-phase AC power source 3 through a transformer 2, the DC side of the same is connected to filter capacitors 41 and 42 and, further, connected to the inverter 5 through filter capacitors 43 and 44 on the inverter side. Further, to the AC side of the same, there is connected an induction motor 6, as the load, for driving the electric vehicle. Here, since it is require to install the filter capacitors as close to the switching elements as possible in order to reduce the effect of the wiring impedance, they are provided separately for the supply converter and the inverter as shown in the drawing. Although it is not shown, it is sometimes practiced to provide the filter capacitor separately for each phase of the supply converter and the inverter in order to further reduce the effect of the wiring impedance.

The controlling apparatus for on-off controlling the switching elements 11a to 11h of the supply converter 1 is constructed as follows. In voltage detectors 71 and 72, a DC voltage edp on the positive side from the neutral point Z1 and a DC voltage edn on the negative side from the neutral point Z1 are detected and the voltages are added together in an adder 81, whereby a DC voltage ed is calculated. In a subtractor 82, the difference between a DC voltage command value Ed* and the DC voltage ed is calculated, from which an AC current effective value command value Is* is calculated by a voltage controller (AVR) 83. In an adder 84, the phase ωt of the AC power source and a phase command value φ* are added together and the sum is processed in a sine wave generator (sin) 85 to generate a reference sine wave, which is, then, multiplied by the AC current effective value command value Is* in a multiplier 86, whereby an AC current command value is* is calculated.

In a subtractor 87, the difference between the AC current command value is* and an AC current is detected by a current detector 74 is obtained, from which a control signal yet for controlling a voltage drop developed across the transformer impedance is obtained by a current controller (ACR) 88. In a divider 89, an AC voltage es detected by a voltage detector 73 is divided by the DC voltage ed and, thereby, a control signal yes for controlling the AC power source voltage is obtained.

In a subtractor 90, the control signal yet is subtracted from the control signal yes and thereby a modulating wave signal ym is obtained.

In a subtractor 91, the DC voltage edn on the negative side is subtracted from the DC voltage edp on the positive side and, thereby, the DC voltage difference Δed is calculated, which is multiplied by a gain in a coefficient multiplier 92, and the thus obtained signal is limited by a limiter circuit 93 so as not to exceed an upper limit and a lower limit, whereby a modulating wave correcting signal amplitude ΔYm is obtained. Further, from the AC current is, a polarity signal taking up a value 1 when the signal is is positive and taking up a value -1 when it is negative, is generated by a polarity discriminator (sign) 94, and this signal and the modulating wave correcting signal amplitude ΔYm are multiplied together in a multiplier 95, whereby a modulating wave correcting signal Δym is obtained. In a subtractor 96, the modulating wave correcting signal Δym is subtracted from the modulating wave signal ym, whereby a modulating wave ymu for the phase U is obtained. Likewise, the phase of the modulating wave signal ym is inverted by a coefficient multiplier 97, whereby a modulating wave ymv for the phase V is obtained.

A pulse signal is generated in a PWM control circuit 98 in accordance with the modulating wave ymu for the phase U and, thereby, the switching elements 11a to 11d of the supply converter 1 are on-off controlled. Similarly, a pulse signal is generated in a PWM control circuit 99 in accordance with the modulating wave ymv for the phase V and, thereby, the switching elements 11a to 11h of the supply converter 1 are on-off controlled. Further, a modulating wave of the inverter is generated by an inverter controller 100 and a pulse signal is generated by an inverter PWM controller 101, and, thereby, the switching elements 51a to 51l of the inverter 5 are on-off controlled.

Now, operation of an embodiment of FIG. 1 will be described.

The supply converter 1 is controlled, when there is no difference between the DC voltage on the positive side edp and the DC voltage on the negative side edn, so that the DC voltage ed becomes equal to its command value Ed* and the power factor agrees with φ*. Also, the inverter 5 is controlled to output current imm allowing the induction motor 6 to rotate at predetermined speed and torque.

Ideally, the supply converter-inverter can keep on operating in the above described conditions. In reality, however, due to fluctuations in the operation of the switching elements in the main circuit, errors in the signals in the control circuit or the detecting circuit, and the like, the output voltage comes to be shifted to either positive or negative side and a difference is produced between the DC voltage on the positive side edp and the DC voltage on the negative side edn. In such case, both the supply converter 1 and the inverter 5 become unable to output voltages according to a command and there arise such problems as occurrence of higher harmonics, eddy currents, and torque pulsations. If the apparatus is let alone in such a state, either the DC voltage on the positive side edp or the DC voltage on the negative side edn falls even down to 0 and thereby the apparatus becomes unable to operate as the PWM power converting apparatus. In practice, the power converting apparatus, before such a thing happens, is stopped by a protecting circuit not shown in FIG. 1. Thus, when there arises a deviation if any in the main circuit or the control circuit of the converting apparatus, the operation becomes unable to be kept on.

There has so far been studied a method of controlling the voltages at the neutral points of the supply converter and the inverter themselves. However, in a supply converter-inverter system, carrying out such neutral point voltage control separately for the supply converter and the inverter causes problems that the control circuit becomes complicated, the number of steps in the controlling software is increased, and the time for executing the calculation increases.

In order to solve such problems, first, there is provided a wiring electrically connecting the center voltage point Z1 of the filter capacitors 41 and 42 of the supply converter 1 with the center voltage point Z2 of the filter capacitors 43 and 44 of the inverter 5. With this structure, the inter-terminal voltages of the filter capacitors 41 and 43 and 42 and 44 become equal to each other, if seen macroscopically, except a minor effect of the wiring impedance, and hence, it is only required now to carry out the neutral point voltage control only on the side of the supply converter or the inverter.

Secondly, the means for performing the neutral point voltage control is provided on the side of the supply converter. While there is such a problem in the neutral point voltage control on the side of the inverter that the number of pulses decreases as the speed is increased and the effect of the neutral point voltage control decreases accordingly, virtually steady effect can be expected from the supply converter throughout its entire operating range because it is constantly operated with a virtually fixed number of pulses.

FIG. 3 shows operations made for the neutral point voltage control in the embodiment of FIG. 1. For the sake of simplicity, description will be made here by paying our attention only to the positive pulse of the phase U and the inter-terminal voltage of the capacitor 41 on the positive side edp.

Although there can be considered four kinds of operations according to the combination of the polarity of the DC voltage difference Δed and the AC current is, the description, here, will be made taking as an example the uppermost case.

When the inter-terminal voltage edp of the filter capacitor 41 is lower than the inter-terminal voltage edn of the filter capacitor 42, the DC voltage difference Δed obtained by the subtractor 94 as the difference of them takes up a positive value. Since the value is multiplied by a gain K in the coefficient multiplier 92 and the value is output through the limiter circuit 93 as the modulating wave correcting signal amplitude ΔYm, ΔYm has a positive value. Since, here, the AC current is is negative, the output of the polarity discriminator 94 becomes -1. Accordingly, the modulating wave correcting signal Δym obtained by multiplying them together in the multiplier 95 becomes negative. Since the modulating wave ymu of the phase U is generally that obtained by subtracting a modulating wave correcting signal Δym from a modulating wave ym as an AC signal, it is biased to the positive side. Accordingly, the pulse width on the positive side becomes wider and, hence, the time during which the terminal on the positive side of the filter capacitor 41 is connected to the load becomes longer. Since, here, the AC current is is negative, a current flows out of the filter capacitor 41 in this case, and, consequently, the voltage edp on the filter capacitor 41 decreases (discharges) . Thus, the difference between the DC voltages edp and edn can be corrected.

Also, in the other three cases of FIG. 3, operation is made such that the difference between the DC voltages edp and end is reduced and it is known that the neutral point voltage control in the embodiment of FIG. 1 can be suitably performed.

The polarity signal as the output of the polarity discriminator 95 was described above as a square wave taking up two values of 1 and -1 as shown in FIG. 4(a). However, since, in that case, the polarity signal changes from 1 to -1 or vice versa each time the AC current is changes its polarity, the modulating wave ymu of the phase U becomes discontinuous and, hence, there is a possibility of occurrence of higher harmonic currents leading to a problem. FIG. 4(b) and FIG. 4(c) show polarity signal waveforms contemplated to solve such a problem.

In the case of FIG. 4(b), the polarity signal is designed not to change instantaneously but to change along a slope. With this, it is considered that the discontinuous, instantaneous change in the modulating wave can be removed and higher harmonics at high levels greatly reduced. Although the higher harmonics can further be decreased according as the slope is made gentler, the effect of the neutral point voltage control is considered to be decreased accordingly. Therefore, setting is made so that a compromise between them can be obtained. The slope need not he in a fixed line but may change along a polygonal line or a sine wave to obtain the same effect.

FIG. 4(c) shows a case where the polarity signal is a sine wave. Since this polarity signal basically agrees with the power source voltage in frequency, no higher harmonics are included. Therefore, higher harmonics on account of execution of the neutral point voltage control can be prevented from occurring.

Although a three-level supply converter and three-level inverter system has been taken as an example in the foregoing, similar technology can be applied to any other multilevel supply converter-inverter system to obtain the same effect.

### INDUSTRIAL APPLICABILITY

While, in multilevel supply converter-inverter systems, the neutral point voltage is obtained by dividing the capacitor in two, it has been difficult to divide the capacitor completely evenly because of situations due to the product control. The apparatus according to the invention as described above has been made to obviate such a difficulty and therefore has plenty of applicability.

## Claims

1. A multilevel power converting apparatus comprising at least two sets of multilevel PWM controlled power supply converters for converting a DC voltage into multilevel AC voltage pulses by means of PWM control, positive DC sides and negative DC sides thereof being connected with each other, the first of said power supply converters having its AC side connected with an AC power source of a fixed frequency, the second of said power supply converters having its AC side outputting variable voltages of variable frequencies and its output terminal being connected with a load, and said first and second power supply converters having their DC sides respectively connected with a first and a second DC stage circuit each thereof being formed of a plurality of serially connected filter capacitors, characterized in that the center voltage points of said first DC stage circuit and said second DC stage circuit are connected with each other and voltage controlling of the center voltage point is carried out on the side of said first power supply converter.

2. A multilevel power converting apparatus according to claim 1, wherein said first DC stage circuit and said second DC stage circuit are divided and provided separately for each phase of said first power supply converter and said second power supply converter.

3. A muitilevel power converting apparatus according to claim 1 or 2, further comprising voltage control means for controlling the voltage at the DC terminal of said first or said second DC stage circuit to a predetermined value, correction means for correcting the signal output from said voltage control means with a deviation detect signal at the center voltage point of said DC stage circuit, and means for carrying out PWM control of said first power supply converter in accordance with the signal from said correction means.

4. A multilevel power converting apparatus according to claim 3, wherein the correcting signal used in correcting the signal output from said voltage control means with a deviation detect signal at the center voltage point of said DC stage circuit is generated on the basis of an output signal of a polarity discriminating circuit for discriminating the polarity of the AC current flowing through said first power supply converter and said deviation detect signal.

5. A multilevel power converting apparatus according to claim 4, wherein the output signal of said polarity discriminating circuit has a waveform of a square wave, a trapezoidal wave, or a sine wave.
